# EUROPEAN PATENT APPLICATION

(11) **EP 2 098 708 A1**
(43) Date of publication of application: **09.09.2009**
(21) Application number: 09152802.6
(22) Date of filing: 13.02.2009
(51) Int. Cl.: F02D 41/00, F02D 9/04, F02B 37/007, F02B 37/22, F02B 75/02

(54) **A method for the operation of a longitudinally scavenged two-stroke large diesel engine and a longitudinally scavenged two stroke large diesel engine**

(30) Priority: 06.03.2008 EP 08152400
(71) Applicant: Wärtsilä Schweiz AG, 8401 Winterthur (CH)
(72) Inventor: Nanda, Sangram Kishore, 8408, Winterthur (CH)
(74) Representative: Sulzer Management AG

(57) **Abstract**

The invention relates to a method for the operation of a longitudinally scavenged two-stroke large diesel engine (1), having a piston (20) being arranged to be movable to and fro in a cylinder (2) along a running surface between a bottom dead centre (UT) and a top dead centre (OT), wherein a fuel is fed into the cylinder (2) of the large diesel engine (1) by an injection nozzle and scavenging slots (3) are provided at an inlet region of the cylinder (2) for the supply of a predetermined amount of scavenging air (4). An outlet valve (5) is provided at a cylinder cover of the cylinder (2) for the expulsion of a combustion gas (6), wherein, in said method, a fresh air (7) available at an environmental pressure is sucked in by a first exhaust gas turbocharger (8, 81) and / or by a second exhaust gas turbocharger (8, 82) and said fresh air (7) is supplied to the cylinder (2) as the scavenging air (4) at a predetermined charge air pressure via the scavenging slots (3), so that an ignition gas mixture is generated in the cylinder (2) from the scavenging air (4) and the fuel. According to the invention, at least one reducing-means (9, 91, 92, 93) for reducing an exhaust gas-flow through the first exhaust gas turbocharger (8, 81) and / or through the second exhaust gas turbocharger (8, 82) is provided, and wherein, in said method, the exhaust gas-flow through the first exhaust gas turbocharger (8, 81) and / or through the second exhaust gas turbocharger (8, 82) is reduced in dependence of a given value of an operational parameter of the large diesel engine (1). Furthermore the invention relates to a longitudinally scavenged two-stroke large diesel engine (1) for the carrying out of the method.

## Description

The invention relates to a method for the operation of a longitudinally scavenged two-stroke large diesel engine and to a longitudinally scavenged two stroke large diesel engine in accordance with the pre-characterising part of the independent claims 1 and 11.

For the increase in power of reciprocating piston combustion engines, such as for example of large diesel engines for ships or stationary units for the production of electrical power, the fresh air is introduced into the combustion engine of a cylinder at raised pressure after a combustion stroke by means of a charging group, which is generally designed as an exhaust gas turbocharger. In this connection a part of the thermal energy of the exhaust gases, which leave the combustion chamber of the cylinder after the combustion stroke can be exploited. For this purpose the hot gases are conveyed out of the combustion chamber of the cylinder to the charging group by opening of an outlet valve. The charging group substantially comprises a turbine, which is driven by the hot exhaust gases entering the charging group under pressure. For its part the turbine drives a compressor through which fresh air is drawn in and compressed. The diffuser with turbine, an arrangement which is often simply termed a turbocharger and which in particular, but not only, in the case of two-stroke large diesel engines; uses a radial compressor as a compressor, is followed by a so-called diffuser, a air cooler, a water separator and an inlet receiver from where the compressed fresh air, also known as charge air or scavenging air is ultimately fed into the individual combustion chambers of the cylinders of the large diesel engine. By means of the use of a charging group of this kind the supply of fresh air can thus be increased and the efficiency of the combustion process in the combustion chamber of the cylinder can be improved.

In the case of large diesel engines, the feeding in of the air takes place at different places at the cylinder, depending on the type. Thus, for example, in longitudinally scavenged two-stroke engines, the air is introduced into the combustion chamber via scavenging slots which are arranged in the running surface in the lower region of the cylinder. In four-stroke engines the charge air is generally introduced via one or more inlet valves which are arranged in the cylinder cover. In this connection two-stroke engines are also certainly known which are equipped with inlet valves in the cylinder cover in place of scavenging slots in the lower region of the cylinder.

Crucial significance is attributed to the charge air cooler already mentioned above for the supply of fresh air of the cylinder. As is well-known to the person averagely skilled in the art, the known charge air coolers are a housing substantially in the shape of a parallelepiped in which cooling packs are accommodated, through which the charging air flows from the inlet of the charge air cooler to the exit of the charge air cooler to cool the charge air. In this connection the charging air is cooled down massively, typically for example from 250°C to 50°C, so that apart from the cooling of the air in the charge air cooler, water from the charge air also condenses in the charge air cooler.

In this connection in the operation of diesel combustion engines considerable quantities of nitrogen oxides (NOₓ) arise with a negative impact on the environment. For this reason enormous efforts have been made to protect the environment, to develop diesel engines with considerably reduced (NOₓ) emissions. The reduction of the (NOₓ) emission can for example be realised by means of selective catalytic reduction of the nitrogen oxides. In large diesel engines in particular, such as are typically used for the operation of ships it is often very difficult for reasons of lack of space - if possible at all - to provide corresponding catalytic converters. For this reason one has concentrated on the development of so-called primary measures in which the generation of the nitrogen oxide in the combustion chamber of the cylinder is already reduced.

For example, it is known in longitudinally scavenged large diesel engines, to add combustion gases to the scavenging air or fresh air outside the cylinder (external exhaust gas recirculation) in order to thereby reduce the oxygen content of the scavenging air. This effects a reduction of the amount of NOₓ formed during the combustion process. The disadvantage of this solution is however that either at least one part of the combustion gases has to be conveyed through the compressor of the charging group (turbocharger) which leads to considerable contamination in the compressor and in the following charge air cooler, or a further pump has to be provided for the compression of the combustion gases, if the combustion gases are first supplied to the fresh air at the high pressure side of the compressor. In this arrangement a disadvantageous pollution of the charge air cooler has to be likewise taken into account in the latter case.

For this reason a method is proposed in EP-A-653 558 for the reduction of the quantity of nitrogen oxide in the exhaust gas of a two-stroke large diesel engine with a charge air group including a turbine and a compressor, which can be termed internal exhaust gas recirculation. According to this method one part of the combustion gases which occur in the combustion process is retained in the cylinder. These retained exhaust gases form a mix with the inflowing fresh air in the following compression stroke which then has a reduced concentration of oxygen in comparison with fresh air, so that fewer nitrogen oxides occur during the subsequent combustion process. Thus a deteriorated or reduced scavenging is consciously realised in the sense that the scavenging of the combustion gases out of the cylinder is incomplete and a considerable part of the exhaust gases remains in the cylinder in each case.

The retaining of a part of the combustion gases in the cylinder is achieved in accordance with EP-A-653 558 using means, which are provided outside of the cylinder. It is thus proposed to remove a part of the fresh air between the outlet of the compressor and the inlet of the cylinder, so that a smaller quantity of fresh air than normally usual enters into the cylinder, which suppresses fewer combustion gases than normal in the compression stroke. Alternatively the proposal is also made to convey the combustion gases emerging from the cylinder past the turbine of the charging group, so that a correspondingly smaller quantity of fresh air is conveyed from the compressor to the cylinder. In this variant, the fresh air supply is thus reduced in that the power of the turbine driving the compressor is reduced.

In particular with large quantities of combustion gases retained in the cylinder, the temperature in the cylinder can increase greatly as a result. This can be counteracted according to EP-A-653 558 in that water is sprayed into the fresh air/exhaust gas mixture present in the cylinder, at least during one part of the compression stroke.

However, this is firstly a very complicated measure from a constructional point of view, since additional devices for the injection of the water have to be installed. On the other hand, the water causes new problems in the cylinder such as corrosion for example, in particular hot gas corrosion on the piston surfaces, piston rings, on the cylinder walls, the outlet valves etc. particularly by chemical reactions of the water with the combustion gases occurring during combustion, for example by the formation of aggressive acids.

Thus, EP 0967 371 B1 proposes reducing the size of the scavenging air slots in order to thus reduce the flow of fresh air into the cylinder which leads to a considerable reduction of the NOₓ proportion in the combustion gases, in other words in the exhaust gases.

However, this likewise leads to a certain increase in the combustion temperature so that even with this solution water also has to be injected additionally into the combustion chamber, because otherwise a greater thermal burden of the engine and its components is to be feared which again results in shorter service intervals, a greater likelihood of breakdown in operation and ultimately in higher operating costs.

Apart from, that all these measures known from the state of the art have the above mentioned disadvantages, in general, all slow speed diesel engines are optimised for specific fuel oil consumption and NOₓ emissions at continuous service rating as it is foreseen that the engine will operate at this load for significant proportion of its life time. However, it may become necessary due to commercial commitments, such as high fuel prices, to operate ships at slower speeds with lower power demand from the main propulsion engine. Engines would then be operating for example at loads below 50% of the maximum continuous rating for significant proportion of their life time where combustion is inferior due to poor scavenging.

The consequence is a sub-optimal scavenging at least in the 30 to 50% load range because of lower efficiency for the corresponding turbine pressure ratios. Sub-optimal scavenging results in less purity in the cylinder and a lower trapped air to fuel ratio, that is to a sub-optimal λ-value of the fuel air mixture in the cylinder. The effect of this is extended combustion duration which can be observed as high exhaust gas temperature and combustion chamber component temperatures. The latter can be acceptable for transient operation, however, if required to operate continuously in the mentioned load range it is expected that the risk of component failure would increase and TBO (Time between overhaul) would decrease.

Starting from the prior art it is therefore the object of the invention to make available an improved method and an improved longitudinally scavenged two-stroke large diesel engine in which an optimal scavenging is guaranteed in a low load range, for example, but not only in the 30 to 50% load range, ensuring at the same time a better efficiency for the corresponding turbine pressure ratios, in order to improve a purity in the cylinder and to establish a better trapped air to fuel ratio, that is an optimal λ-value of the fuel air mixture in the cylinder in the low load operation state of the diesel engine.

The subjects of the invention satisfying this object are characterised by the features of the independent claims 1 and 11.

The dependent claims relate to particularly advantageous embodiments of the invention.

Thus the invention relates to a method for the operation of a longitudinally scavenged two-stroke large diesel engine, having a piston being arranged to be movable to and fro in a cylinder along a running surface between a bottom dead centre and a top dead centre, wherein a fuel is fed into the cylinder of the large diesel engine by an injection nozzle and scavenging slots are provided at an inlet region of the cylinder for the supply of a predetermined amount of scavenging air. An outlet valve is provided at a cylinder cover of the cylinder for the expulsion of a combustion gas, wherein, in said method, a fresh air available at an environmental pressure is sucked in by a first exhaust gas turbocharger and / or by a second exhaust gas turbocharger and said fresh air is supplied to the cylinder as the scavenging air at a predetermined charge air pressure via the scavenging slots, so that an ignition gas mixture is generated in the cylinder from the scavenging air and the fuel. According to the invention, at least one reducing-means for reducing an exhaust gas-flow through the first exhaust gas turbocharger and / or through the second exhaust gas turbocharger is provided, and wherein, in said method, the exhaust gas-flow through the first exhaust gas turbocharger and / or through the second exhaust gas turbocharger is reduced in dependence of a given value of an operational parameter of the large diesel engine.

Therefore, it is essential for the present invention that at least one reducing-means for reducing an exhaust gas-flow through the first exhaust gas turbocharger and /or through the second exhaust gas turbocharger is provided, and that the exhaust gas-flow through the first exhaust gas turbocharger and / or through the second exhaust gas turbocharger is reduced in dependence of a given value of an operational parameter of the large diesel engine.

In practice, the reducing-means in accordance with the present invention is a controllable gas-valve and / or a shut-off valve and / or a butterfly valve and or any other reducing-means which allows to reduce the outlet area from the exhaust manifold by rendering one or more turbochargers either out of operation and / or in order to reduce a gas-flow through at least one turbocharger for better part load performance by adjusting for example the controllable gas-valve according to a pre-settable value of a gas-flow through the turbocharger. On the other hand, as the load of the engine is increased, the gas-flow through the turbocharger is also increased and / or two or more turbochargers are sequentially switched on depending on a given value of the operational parameter of the large diesel engine.

Regarding a special embodiment of the invention, to achieve optimal scavenging and better combustion for acceptable component temperatures and longer TBO's during continuous operation, for example in the 30 to 50% load range, it is suggested by the present invention to cut out one or more turbochargers. The cutting out of a turbocharger reduces the effective nozzle area increasing the pressure ratio across the operating turbine of the turbocharger to values corresponding to an optimised operational state of the large diesel engine.

The effect of this is reduced combustion duration which can be observed as lower exhaust gas temperature and lower combustion chamber component temperatures. As a result, even if operating the large diesel engine continuously in the mentioned low load range, no risk of component failure and no increase of TBO (Time between overhaul) is expected. At the same time, a reduction of the emission of nitrogen oxides is achieved without increasing the thermal burden of the engine and without substantial constructional alterations, so that existing engines can also be operated using the method in accordance with the invention or can be retrofitted through simple measures, without the degree of efficiency being affected i.e. without an increased fuel consumption and / or a power reduction having to be taken into account.

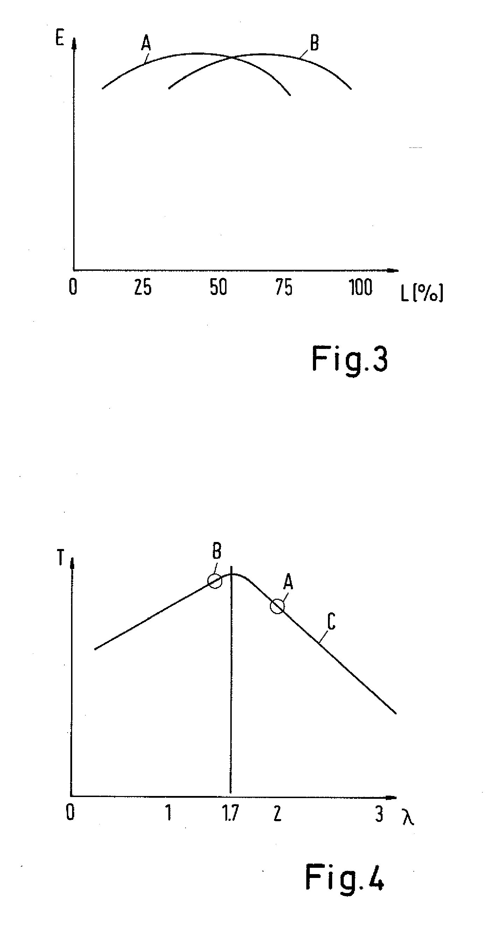

That is:
- The turbocharger efficiency at the optimised point can be achieved at part load, as explained by Fig. 3.
- The scavenging pressure at optimised point can be achieved at part load
i.e. better scavenging.
- Higher trapped air to fuel ratio, that is an optimized λ-value for lower component temperatures is achieved as shown in Fig. 4.

This is for example applied in conjunction with a variation of other engine tuning parameters, such as exhaust valve timing to target a better sfoc-NOx trade off in the part load region (sfoc = specific fuel oil consumption). In particular as the load exceeds a certain preset value, depending on the installation, all turbochargers will come into operation. A fail safe System can also be designed to prevent overpressure in the cylinder due to high scavenge air pressure or load increase above the preset value without all turbochargers in operation. Beside others, one of the most important advantages of the method and the diesel engine according to the present invention is optimum thermodynamic performance of the engine across the entire load range.

In a special embodiment of the method according to the present invention, the reducing-means is for example provided at an exhaust-gas-manifold of the two-stroke large diesel engine. It is understood, that the reducing means can be provided at any appropriate position at or within the exhaust gas turbocharger system, for example at an first exhaust-gas-inlet and / or at an first exhaust gas outlet of the first exhaust gas turbocharger and / or the reducing-means can be provided at an second exhaust-gas-inlet and / or at second an exhaust gas outlet of the second exhaust gas turbocharger.

In practice, the reducing-means is in particular a controllable gas-valve und / or a shut-off valve and / or a butterfly valve.

Regarding a method in accordance with the present invention, which is very import in practise, the operational parameter is a load and / or a revolution speed and / or an exhaust-gas temperature and / or an exhaust-gas pressure and / or an exhaust-gas pressure ratio and or another suitable operational parameter, and, preferably, the reducing-means is controlled by a control-unit in dependence of the operational parameter, in particular to adjust a turbocharger efficiency to a given efficiency value, and / or a fail-safe-system is provided to prevent an overpressure in the cylinder.

According to the present invention, the two-stroke large diesel engine is operated in a load range between 10% to 90% of a maximum load, especially in a load range between 20% to 70% of the maximum load, preferably in a load range between 30% to 50% of the maximum load, in particular at 45% or at 55% of the maximum load, and / or the two-stroke large diesel engine is operated in a speed range between 10% to 90% of a maximum revolution speed, especially in a speed range between 20% to 90% of the maximum revolution speed, preferably in a speed range between 70% to 85% of the maximum revolution speed, in particular at 70% or at 80% of the maximum revolution speed.

According to a special embodiment of the invention, a trapped air to fuel ratio is adjusted to a given combustion temperature and / or a noxious substance in the combustion gas is reduced, in particular a NOₓ burden is reduced.

Ultimately the method in accordance with the invention exploits a cunning combination of thermodynamic processes in the most diverse engine parts during the compression stroke in the cylinder, in the compression in the exhaust gas charger in the cooling in the charge air cooler etc., which ultimately leads as a whole to the described positive effects during the operation of a large diesel engine by the use of the method in accordance with the invention.

The invention further relates to a longitudinally scavenged two-stroke large diesel engine for carrying out the method in accordance with the invention, wherein a piston is arranged to be movable to and fro in a cylinder along a running surface between a bottom dead centre and a top dead centre, which two-stroke large diesel engine comprises an injection nozzle to feed a fuel into a cylinder of the large diesel engine, wherein scavenging slots are provided at an inlet region of the cylinder for the supply of a pre-determinable amount of scavenging air, and an outlet valve is provided at a cylinder cover of the cylinder for the expulsion of a combustion gas. In the operation state, a fresh air available at an environmental pressure is sucked in by a first exhaust gas turbocharger and / or by a second exhaust gas turbocharger and said fresh air is supplied to the cylinder as a scavenging air at a pre-determinable charge air pressure via the scavenging slots, so that an ignition gas mixture can be generated in the cylinder from the scavenging air and the fuel. According to the invention, at least one reducing-means for reducing an exhaust gas-flow through the first exhaust gas turbocharger and / or through the second exhaust gas turbocharger is provided to reduce the exhaust gas-flow through the first exhaust gas turbocharger and / or through the second exhaust gas turbocharger in dependence of a given value of an operational parameter of the large diesel engine.

As already mentioned, in a special embodiment of the present invention, the reducing-means is provided at an exhaust-gas-manifold of the two-stroke large diesel engine, and / or the reducing-means is provided at an first exhaust-gas-inlet and / or an at first exhaust gas outlet of the first exhaust gas turbocharger, and / or the reducing-means is provided at an second exhaust-gas-inlet and / or at an second exhaust gas outlet of the second exhaust gas turbocharger.

Regarding a special embodiment which is very important in practice, the reducing-means is a controllable gas-valve and / or a shut-off valve and / or a butterfly valve.

Preferably, a sensor for measuring the operational parameter is provided, in particular a temperature sensor and / or a pressure sensor and / or a speed sensor and / or a load sensor for measuring a load and / or a revolution speed and / or an exhaust-gas temperature and / or an exhaust-gas pressure and / or an exhaust-gas pressure ratio and or another suitable operational parameter. In addition, the reducing-means can be controlled by a control-unit in dependence of the operational parameter, in particular to adjust a turbocharger efficiency to a given efficiency value, and / or a fail-safe-system is provided to prevent an overpressure in the cylinder

A two-stroke large diesel engine in accordance with the invention can in practice preferably be an electronically controlled engine retrofitted in accordance with the invention, in particular a Wärtsilä RT-Flex engine or a MAN B&W ME engine so that the opening angle and/or the closing angle of the outlet valve and/or an injection time point and/or an injection duration is independently electronically adjustable and can preferably be operated hydraulically.

The invention will be explained more closely in the following with the help of the drawings which show:
- Fig. 1: schematically the construction in principal of a prior art longitudinally scavenged two-stroke large diesel engine with an exhaust gas turbocharger system as;
- Fig. 2: a two-stroke large diesel engine in accordance with the invention;
- Fig. 3: turbocharger efficiency as a function of the load in the operation state;
- Fig. 4: component temperature T as a function of trapped air to fuel ratio λ.

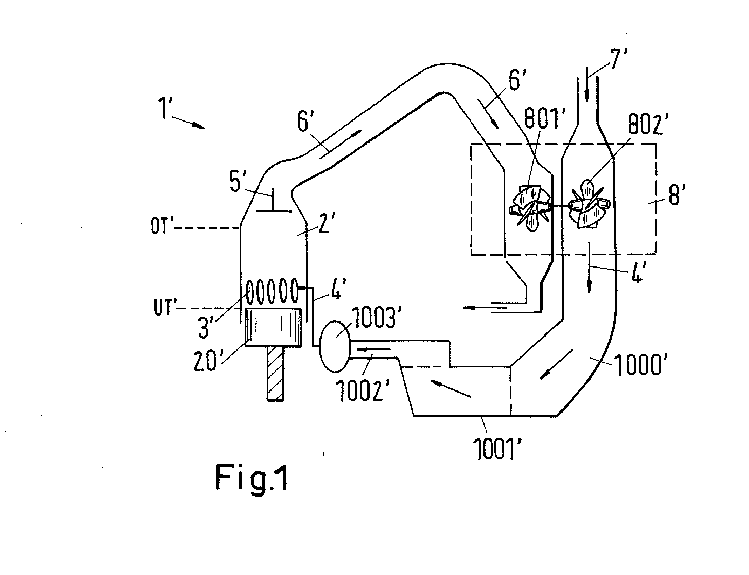

Fig. 1 shows, in a schematic illustration for the explanation of the cooperation of the different components, the construction in principle of an exhaust gas turbocharger system of a large diesel engine as known from the state of the art, which diesel engine is formed as a two-stroke large diesel engine with longitudinal scavenging. In the following, the large diesel engine according to Fig. 1 as known from the state of the art, is referred to in the following with the reference numeral 1'.

To distinguish the present invention clearly from prior art embodiments, reference numerals of prior art embodiments carry an inverted comma, while reference numerals related to features of special embodiments according to the present invention, do not carry an inverted comma.

The large diesel engine 1' known from the state of the art usually includes, in a manner known per se, a plurality of cylinders 2' with an outlet valve 5' arranged in a cylinder cover of the cylinder 2', and with a piston 20' being arranged to be movable to and fro in the cylinder 2' along a running surface between a bottom dead centre UT' and a top dead centre OT'. The cylinder walls of the cylinder 2' with the cylinder cover and the piston 20' bound a combustion space of the cylinder 2' in known manner. A plurality of scavenging air apertures 3' are provided in an inlet region of the cylinder 2', which are designed as scavenging slots 3'. Depending on the position of the piston 20' the scavenging slots 3' are covered or exposed by it. The scavenging air 4' also termed charge air 4' can flow into the combustion space of the cylinder 2' through the scavenging air apertures 3'. The combustion gases 6' occurring during the combustion flow through the outlet valve 5' arranged in the cylinder cover through an exhaust gas duct 10' which is often designed as an exhaust-gas-manifold 10' which adjoins the outlet valve 5', into an exhaust gas turbocharger 8'.

In a manner known per se the exhaust gas turbocharger 8' includes as essential components a compressor with a compressor rotor 802' for the compression of fresh air 7' and also a turbine with a turbine rotor 801' for driving of the compressor rotor 802' which is fixedly connected to the turbine rotor 801' by a shaft. The turbine and the compressor are arranged in a housing and form the exhaust gas turbocharger 8' which in the present case is formed as a radial compressor at the compressor side. The turbine is driven by the hot combustion gases 6' flowing in from the combustion space of the cylinder 2'.

For the charging of the combustion chamber of the cylinder 2' with scavenging air 4' fresh air 7' is sucked in through the compressor rotor 802' via an intake air stub and is compressed to an elevated pressure in the exhaust gas turbocharger 8', which is somewhat higher than the charge air pressure finally prevailing in the cylinder 2'. The compressed fresh air 7' passes out of the exhaust gas turbocharger 8' as scavenging air 4' through the following diffuser 1000' and the charge air cooler 1001' via the water separator 1002' into an inlet receiver 1003' which is preferably formed as a receiver space 1003' and from where the compressed fresh air 7' as scavenging air 4' ultimately passes through the scavenging slots 3' at an increased charge air pressure into the combustion space of the cylinder 2'.

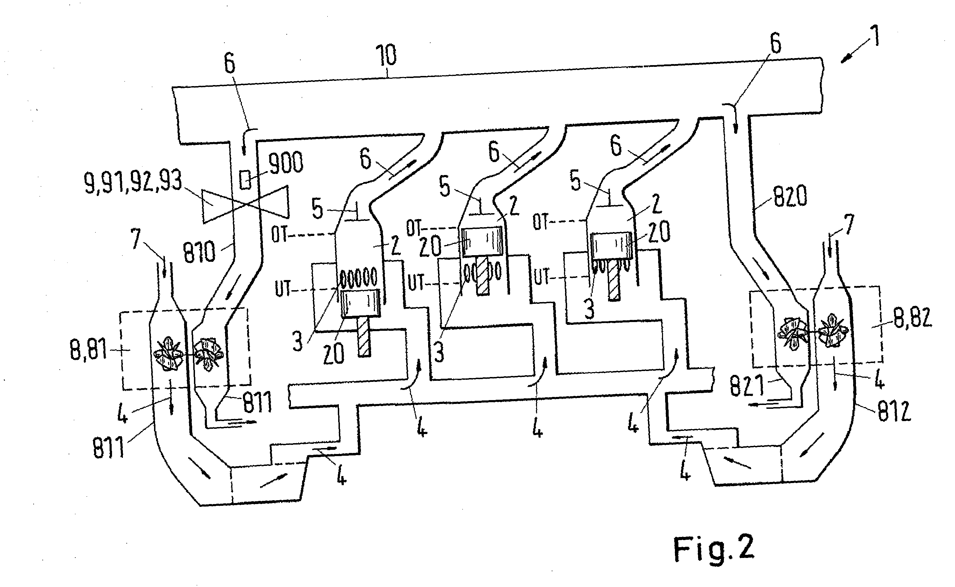

Fig. 2 shows schematically a large diesel engine according to the present invention, which diesel engine is formed as a two-stroke large diesel engine having a plurality of cylinders and exhaust gas turbochargers as described by Fig. 1.

The crucial difference between the two stroke large diesel engine in accordance with the present invention, which is shown in Fig. 2, and the prior art engine according to Fig. 1, is that the large diesel engine, which is referred to in the whole of the following with the reference numeral 1, includes a reducing means 9, 91, 92, 93 which allows in the present example to reduce the exhaust gas-flow through the first exhaust gas turbocharger 81.

The longitudinally scavenged two-stroke large diesel engine 1 according to the present invention and shown in Fig. 2, comprises a plurality of pistons 20, each being arranged to be movable to and fro along a running surface between a bottom dead centre UT and a top dead centre OT in a corresponding cylinder 2. The engine further comprises an injection nozzle to feed a fuel into the cylinder 2 of the large diesel engine, wherein scavenging slots 3 are provided at an inlet region of the cylinder 2 for the supply of a pre-determinable amount of scavenging air 4, and an outlet valve 5 is provided at a cylinder cover of the cylinder 2 for the expulsion of a combustion gas 6. In the operation state a fresh air 7 available at an environmental pressure is sucked in by a first exhaust gas turbocharger 8, 81 and / or by a second exhaust gas turbocharger 8, 82 and said fresh air 7 is supplied to the cylinder 2 as a scavenging air 4 at a pre-determinable charge air pressure via the scavenging slots 3, so that an ignition gas mixture can be generated in the cylinder 2 from the scavenging air 4 and the fuel. It is understood, that regarding special embodiments of the present invention, the large diesel engine 1 may comprise more than three cylinders 2, for example six, twelve, fourteen or any other number of cylinders 2 and, of cause, the large diesel engine 1 may have more than two exhaust gas turbochargers 8.

According to the invention, a reducing-means 9, 91, 92, 93 for reducing an exhaust gas-flow, in the present example an exhaust gas-flow through the first exhaust gas turbocharger 81 is provided to reduce the exhaust gas-flow through the first exhaust gas turbocharger 8, in particular in dependence of a given value of an operational parameter of the large diesel engine 1.

In the present example of Fig. 2, the reducing-means 9, 91, 92, 93 is provided at a first exhaust-gas-inlet 810 of the first exhaust gas turbocharger 81. It goes without saying that in another embodiment of the present invention the reducing-means 9, 91, 92, 93 can also be provided at an first exhaust-gas-outlet 811 of the first exhaust gas turbocharger 81 and / or at a second exhaust-gas-inlet 820 and / or at an second exhaust gas outlet 821 of the second exhaust gas turbocharger 82.

As already mentioned, it is also possible that the reducing-means 9, 91, 92, 93 is provided at the exhaust-gas-manifold 10 of the two-stroke large diesel engine.

Regarding the special embodiment of Fig. 2 the reducing-means 9 is a controllable gas-valve 91, wherein a sensor 900 for measuring the operational parameter is provided, which sensor is in the present example of Fig. 2 a temperature sensor 900.

The large diesel engine according to Fig. 2, additionally comprises a control unit for controlling the reducing-means 91 in dependence of the operational parameter, which is in the present example the temperature of the exhaust gas 6 for adjusting a turbocharger efficiency E to a given efficiency value. A fail-safe-system is also provided to prevent an overpressure in the cylinder 2. For reasons of clarity, both, the fail-safe-system and the control unit are not shown in Fig. 2.

Regarding the special embodiment of Fig. 2, to achieve optimal scavenging and better combustion for acceptable component temperatures and longer TBO's during continuous operation, for example in the 30 to 50% load range, the first exhaust gas turbocharger 81 can be cut out by the controllable gas-valve 91. The cutting out of the first exhaust gas turbocharger 81 reduces the effective nozzle area increasing the pressure ratio across the operating turbine of the remaining second exhaust gas turbocharger 82 to values corresponding to an optimised operational state of the large diesel engine 1. That is a turbocharger efficiency E of the second exhaust gas turbocharger 82 is adjusted to a to a given efficiency value.

The adjustment of the turbocharger efficiency E is shown in Fig. 3. The diagram of Fig. 3 displays the turbocharger efficiency E of the turbochargers 8 of the large diesel engine 1 in dependence of the load L of the large diesel engine 1 in the operating state, wherein in Fig. 4 a component temperature T as a function of trapped air to fuel ratio λ is displayed.

Curve B in Fig. 3 and Point B of curve C in Fig. 4 correspond to operation states of the large diesel engine 1 in which all turbochargers 8 of the large diesel engine 1 are in operation. It can be clearly seen that, in case that all turbochargers 8 are in operation, the turbocharger efficiency will decrease, in particular in a load range below 50%, and correspondingly, according to Fig. 4 the trapped air to fuel ratio will also decrease and will lead to a higher exhaust gas temperature T and, as a result to higher combustion chamber component temperatures T.

The effect of cutting out one or more turbocharger 8 is represented by curve A of Fig. 3 and points A in curve C of Fig. 4, respectively. Cutting out one or more turbochargers 8 in the low load range, for example in a load range below 50%, will according to Fig. 3 lead to a maximum of the turbocharger efficiency E in the low load range, for example at about 50% of a maximum load of the large diesel engine 1, and will lead in the same time to a decrease of the exhaust gas temperature according to point A in curve C as shown in Fig. 4.

The effect of this is reduced combustion duration which can be observed as lower exhaust gas temperature and lower combustion chamber component temperatures. As a result, even if operating the large diesel engine continuously in the mentioned low load range, no risk of component failure and no increase of TBO (Time between overhaul) is expected. At the same time, a reduction of the emission of nitrogen oxides is achieved without increasing the thermal burden of the engine and without substantial constructional alterations, so that existing engines can also be operated using the method in accordance with the invention or can be retrofitted through simple measures, without the degree of efficiency being affected i.e. without an increased fuel consumption and / or a power reduction having to be taken into account.

It is to be understood that all of the embodiments in accordance with the invention described in this application are to be understood merely by way of example and in particular all embodiments as described or obvious within the context of the present invention, can be provided either alone or in all suitable combinations in special examples of embodiments in accordance with the invention, so that all suitable combinations of the embodiments described in this invention are included and covered by the present invention.

## Claims

1. A method for the operation of a longitudinally scavenged two-stroke large diesel engine (1), having a piston (20) being arranged to be movable to and fro in a cylinder (2) along a running surface between a bottom dead centre (UT) and a top dead centre (OT), wherein a fuel is fed into the cylinder (2) of the large diesel engine (1) by an injection nozzle and scavenging slots (3) are provided at an inlet region of the cylinder (2) for the supply of a predetermined amount of scavenging air (4) and an outlet valve (5) is provided at a cylinder cover of the cylinder (2) for the expulsion of a combustion gas (6), wherein, in said method, a fresh air (7) available at an environmental pressure is sucked in by a first exhaust gas turbocharger (8, 81) and / or by a second exhaust gas turbocharger (8, 82) and said fresh air (7) is supplied to the cylinder (2) as the scavenging air (4) at a predetermined charge air pressure via the scavenging slots (3), so that an ignition gas mixture is generated in the cylinder (2) from the scavenging air (4) and the fuel, **characterised in that** at least one reducing-means (9, 91, 92, 93) for reducing an exhaust gas-flow through the first exhaust gas turbocharger (8, 81) and / or through the second exhaust gas turbocharger (8, 82) is provided, and wherein, in said method, the exhaust gas-flow through the first exhaust gas turbocharger (8, 81) and / or through the second exhaust gas turbocharger (8, 82) is reduced in dependence of a given value of an operational parameter of the large diesel engine (1).

2. A method in accordance with claim 1 wherein, the reducing-means (9, 91, 92, 93) is provided at an exhaust-gas-manifold (10) of the two-stroke large diesel engine (1).

3. A method in accordance with any one of claims 1 or 2, wherein the reducing-means (9, 91, 92, 93) is provided at an first exhaust-gas-inlet (810) and / or at an first exhaust gas outlet (811) of the first exhaust gas turbocharger (8, 81) and / or the reducing-means (9, 91, 92, 93) is provided at an second exhaust-gas-inlet (820) and / or at second an exhaust gas outlet (821) of the second exhaust gas turbocharger (8, 82).

4. A method in accordance with any one of the previous claims, wherein the reducing-means (9, 91, 92, 93) is a controllable gas-valve (91) und / or a shut-off valve (92) and / or a butterfly valve (93).

5. A method in accordance with any one of the previous claims, wherein the operational parameter is a load and / or a revolution speed and / or an exhaust-gas temperature and / or an exhaust-gas pressure and / or an exhaust-gas pressure ratio.

6. A method in accordance with any one of the previous claims, wherein the two-stroke large diesel engine (1) is operated in a load range between 10% to 90% of a maximum load, especially in a load range between 20% to 70% of the maximum load, preferably in a load range between 30% to 50% of the maximum load, in particular at 45% or at 55% of the maximum load.

7. A method in accordance with any one of the previous claims, wherein the two-stroke large diesel engine (1) is operated in a speed range between 10% to 90% of a maximum revolution speed, especially in a speed range between 20% to 90% of the maximum revolution speed, preferably in a speed range between 70% to 85% of the maximum revolution speed, in particular at 70% or at 80% of the maximum revolution speed.

8. A method in accordance with any one of the previous claims, wherein a trapped air to fuel ratio is adjusted to a given combustion temperature (T).

9. A method in accordance with any one of the previous claims, in which a noxious substance in the combustion gas (6) is reduced, in particular a NOₓ burden is reduced.

10. A method in accordance with any one of the previous claims, wherein the reducing-means (9, 91, 92, 93) is controlled by a control-unit in dependence of the operational parameter, in particular to adjust a turbocharger efficiency (E) to a given efficiency value, and / or a fail-safe-system is provided to prevent an overpressure in the cylinder (2).

11. A longitudinally scavenged two-stroke large diesel engine, comprising a piston (20) being arranged to be movable to and fro in a cylinder (2) along a running surface between a bottom dead centre (UT) and a top dead centre (OT) and an injection nozzle to feed a fuel into the cylinder (2) of the large diesel engine, wherein scavenging slots (3) are provided at an inlet region of the cylinder (2) for the supply of a pre-determinable amount of scavenging air (4), and an outlet valve (5) is provided at a cylinder cover of the cylinder (2) for the expulsion of a combustion gas (6), wherein in the operation state a fresh air (7) available at an environmental pressure is sucked in by a first exhaust gas turbocharger (8, 81) and / or by a second exhaust gas turbocharger (8, 82) and said fresh air (7) is supplied to the cylinder (2) as a scavenging air (4) at a pre-determinable charge air pressure via the scavenging slots (3), so that an ignition gas mixture can be generated in the cylinder (2) from the scavenging air (4) and the fuel, **characterised in that** at least one reducing-means (9, 91, 92, 93) for reducing an exhaust gas-flow through the first exhaust gas turbocharger (8, 81) and / or through the second exhaust gas turbocharger (8, 82) is provided to reduce the exhaust gas-flow through the first exhaust gas turbocharger (8, 81) and / or through the second exhaust gas turbocharger (8, 82) in dependence of a given value of an operational parameter of the large diesel engine.

12. A two-stroke large diesel engine in accordance with claim 11, wherein the reducing-means (9, 91, 92, 93) is provided at an exhaust-gas-manifold (10) of the two-stroke large diesel engine.

13. A two-stroke large diesel engine in accordance with any one of the claims 11 or 12, wherein the reducing-means (9, 91, 92, 93) is provided at an first exhaust-gas-inlet (810) and / or an at first exhaust gas outlet (811) of the first exhaust gas turbocharger (8, 81), and / or the reducing-means (9, 91, 92, 93) is provided at an second exhaust-gas-inlet (820) and / or at an second exhaust gas outlet (821) of the second exhaust gas turbocharger (8, 82).

14. A two-stroke large diesel engine in accordance with any one of the claims 11 to 13, wherein the reducing-means (9, 91, 92, 93) is a controllable gas-valve (91) and / or a shut-off valve (92) and / or a butterfly valve (93).

15. A two-stroke large diesel engine in accordance with any one of the claims 11 to 14 wherein a sensor for measuring the operational parameter is provided, in particular a temperature sensor and / or a pressure sensor and / or a speed sensor and / or a load sensor.

16. A two-stroke large diesel engine in accordance with any one of the claims 11 to 15, wherein a control unit is provided for controlling the reducing-means (9, 91, 92, 93) in dependence of the operational parameter, in particular for adjusting a turbocharger efficiency (E) to a given efficiency value, and / or a fail-safe-system is provided to prevent an overpressure in the cylinder (2).
